Europäisches Patentamt

European Patent Office

Office européen des brevets

(19)

(11) Publication number: 0 406 458 A1

## (12) EUROPEAN PATENT APPLICATION

(21) Application number: 89112131.1

(51) Int. Cl.5: A01G 31/02

(22) Date of filing: 03.07.89

(43) Date of publication of application:
09.01.91 Bulletin 91/02

(84) Designated Contracting States:
AT BE CH DE ES FR GB GR IT LI LU NL SE

(71) Applicant: BENTLE PRODUCTS AG
Grabenstrasse 1 Postfach 409
CH-6301 Zug(CH)

(72) Inventor: Ahm, Poul Henrik
c/Olof Palme 11 5
E-35010 Las Palmas Gran Canaria(ES)

(74) Representative: Liska, Horst, Dr. et al
Patentanwälte H. Weickmann, Dr. K. Fincke,
F.A. Weickmann, B. Huber, Dr. H. Liska, Dr. J.
Prechtel Möhlstrasse 22 Postfach 86 08 20
D-8000 München 86(DE)

(54) A growing device and a system for hydroponical growing of plants.

(57) A growing device (10) for hydroponical growing of plants (18), comprises a collapsed plastic tubing (1) having a first and second longitudinal, closed edge (2, 3) opposing each other. The two opposing layers (4, 5) of the collapsed tubing (1) are sealed along sealing lines (6) transverse to and spaced along the length of the tubing (1). The transverse sealing lines (6) extend between points located at some distance from the two closed edges (2, 3) leaving longitudinal passageways (7, 8) along the length of said closed edges (2, 3) of the collapsed tubing (1) and forming a series of successive, flat transverse passageways (9) separated from each other by the transverse sealing lines (6) and open to the two longitudinal passageways (7, 8) at their opposite ends. In a system using said growing device (10) a supply pipe (14) having outlets for nutrient solution is inserted into the longitudinal passageway (7) at the first closed edge (2), and nested upon and between two closed parallel horizontally stretched wires (15) with the rest of the growing device (10) suspended therefrom. The roots (19) of a plant (18) are inserted in each transverse passageway (9) and nutrient solution supplied via the supply pipe (14) is percolated over the roots and collected in the lower longitudinal passageway (8) and passed on through an outlet (12) into a gutter leading to a collecting tank with means for monitoring and adjusting the content of nutrients and other additives before recirculation of the solution.

Fig.1

## A GROWING DEVICE AND A SYSTEM FOR HYDROPONICAL GROWING OF PLANTS

The present invention relates to a growing device for hydroponical growing of plants and a system including said growing device.

Various devices of this kind have been developed through the time. All of the devices have, however, been based on constructions and functions leaving the plant roots either immersed in the nutrient solution, such as e.g. disclosed in US-PS 3,739,522, or surrounded by a growth medium from time to time saturated with nutrient solution, e.g. by dipping said medium in the nutrient solution, such as disclosed in US-PS 4,118,891. In either situation, the exchange of nutrient solution around the roots is rather slow. As a result the supply of nutrients and oxygen to the roots as well as the removal of waste products from the roots is inadequate so that the conditions for the growth of the plant is unsatisfactory.

A continuous and fast exchange of the nutrient solution around the roots is necessary in order to ensure a fast removal of waste products and a steady supply of fresh nutrients and oxygen. The main advantage resulting in carrying out a continuous and fast exchange is the possibility of minimizing the concentrations of nutrient salts around the roots, thereby reducing the osmotic pressure outside the roots while the necessary nutrient salts are still provided.

In DK patent application no. 4420/79, filed on October 19, 1979, a method and a device to overcome this problem is disclosed, wherein a porous growth substrate surrounded by a plastic film in form of a bag is used for developing the roots of a single plant in that the growth substrate is continuously supplied with water containing the additives necessary for the growth of the plant, and whereby the water is collected from below the bottom of the bag and recirculated.

The object of the present invention is to disclose an improved and simplified growing device for the practising of a method for simultaneously growing several plants as well as a system including said device.

The inventive growing device is characterised by comprising
- a windable length of a pair of superposed layers of water-impervious material,
- said two layers being interconnected along a first longitudinal edge thereof, and
- said two layers further being sealed along sealing lines extending transverse to and spaced along the longitudinal direction of the length,
- and where each of said transverse sealing lines extends between a first point located some dis-. tance away from the first edge and a second point located some distance away from the opposing second longitudinal edge of said layers,
- said sealing lines thereby leaving a free longitudinal passageway extending along the length of said first edge and forming a series of successive, transverse passageways separated from each other by the transverse sealing lines and open to the longitudinal passageway at the first edge and to the second edge,
- said transverse passageways having a substantially flat cross-section.

The resulting device is usable for simultaneously growing several plants, said device having a longitudinal passageway for the supply of nutrient solution, for instance by means of a supply pipe inserted therein, and a series of transverse passageways, each for the growth of one plant and for the percolation of nutrient solution therethrough.

A preferred embodiment of the growing device of the invention is characterised by
- a windable, collapsed plastic tubing, its pair of superposed layers being interconnected along opposing first and second longitudinal, closed edges, respectively, of said collapsed tubing,
- said two superposed layers of the collapsed tubing further being sealed along transverse sealing lines extending transverse to and spaced along the longitudinal direction of the length of the tubing,
- and where each of said transverse sealing lines extends between a first point located some distance away from the first closed edge and a second point located some distance away from the opposing second closed edge of the collapsed tubing,
- said sealing lines thereby leaving free longitudinal passageways, each extending along the length of a respective one of said closed edges of the collapsed tubing and forming a series of successive, transverse passageways separated from each other by the transverse sealing lines and open to both of said longitudinal passageways.

This embodiment is very advantageous, as it is inexpensive and moreover has a further longitudinal passageway for the collection and passing-on of excess nutrient solution from all the transverse passageways.

The growing device is intended for use without growth substrate and in a vertically suspended position with the transverse passageways extending in a vertical plane. As a result a fast percolation of fresh nutrient solution through each transverse passageway is obtained, thus attaining optimum and uniform conditions for the growth of each plant.

The device is of simple construction and inexpensively manufactured, as it is preferably made by simply welding together of a continuously blown plastic tube along the transverse sealing lines followed by separating the tube into tubings of a length suitable for the purpose of the topic. Furthermore, the device is easy to instal and to use, thereby minimizing the total cost of growth of the plants. The device may also be made of one or more lengths of plastic film put together in a superposed position or of other bendable materials impervious to water, such as waterproof paper or other waterproof fibrous fabrics. The interconnections and sealings may be carried out in any known way. The material used is preferably of a type impenetrable to light. More preferably the material is of a light-reflecting type thereby minimizing the amount of heat collected in the growing device. In an advantageous embodiment of the growing device according to the invention the tubing may also comprise a heat-insulating material, such as a foamed or otherwise formed cellular film material, thereby reducing the heat transfer through the tubing and obtaining an economic use of heated nutrient solution.

A further preferred embodiment of hte growing device of the invention is characterised by
- a windable, collapsed plastic tubing, having two superposed layers interconnected along opposing first and second longitudinal, closed edges, respectively, of said collapsed tubing,
- said two superposed layers of the collapsed tubing being sealed along two parallel longitudinal rows of transverse sealing lines extending between a first point located some distance away from a closed edge of the collapsed tubing, and a second point located further away from said closed edge and some distance away from the centre line of the collapsed tubing and on the same side as said first point,
- said rows of sealing lines thereby leaving free longitudinal passageways each extending along the length of a respective one of said closed edges and a free longitudinal, central passageway extending between the two parallel rows of sealing lines, said two rows further forming two series of successive, transverse, flat passageways separated from each other by the transverse sealing lines and each open to a corresponding longitudinal, outer passageway and to the longitudinal, central passageway.

This embodiment is particularly suitable for outdoor growing of plants, as it is very easily mounted in a stable position so that the growing device can resist wind action. Depending on preselected arrangements, this embodiment moreover allows rainwater either to be collected and integrated in the growing system or to be discarted when needed. Depending on the culture grown, it is furthermore possible to grow an increased number of plants per unit length of the growing device without requiring a corresponding larger area of access to the plants by simply placing more plants along the length of each transverse passageway.

The transverse sealing lines dividing the tubing are either straight or curved lines extending perpendicular to or inclined to the longitudinal direction of the length or tubing.

An embodiment of the growing device having two parallel rows of sealing lines, which is of particular interest from a manufacturing point of view is characterised in that the transverse sealing lines of the two rows are inclined to the longitudinal direction of the tubing in a substantially symmetrical way with respect to the centre line. Thus the two sides of the growing device display the same properties during production as well as in use of the system.

In one embodiment of the inventive device the transverse sealing lines are straight lines inclined at an acute angle of between $10°$ and $90°$, preferably between $10°$ and $45°$ most preferably about $25°$, to the longitudinal direction of the device, thereby maintaining a fast percolation of the nutrient solution through the transverse passageways, when the device is suspended with the transverse passageways oriented in a substantially vertical plane. In order to maximise the growing place left above the device within a predetermined level, e.g. inside the roof of a greenhouse, the angle should be as small as possible, whereby the height of the device between the upper and the lower, longitudinal edges thereof is as low as possible for a given length of the transverse passageways.

Depending on the type of plants grown, different proportions between the length and the width of the transverse passageways are recommended. For most purposes, however, it is satisfactory that the dimension of the transverse passageway from one longitudinal passageway to the other is about 3-5 times the dimension of the transverse passageway in the longitudinal direction of the device.

The choice of width of the longitudinal passageways between the closed edges of the tubing and the ends of the transverse sealing lines depends on the manner of supplying the nutrient solution, for instance on the dimension of the supply pipes to be used, and on the space necessary for the roots and for the collection and outlet of the percolated water. For most purposes, however, it is satisfactory, that the transverse sealing lines extends between a distance of about 20-80 mm away from a first closed edge of the layers or the collapsed tubing. On the other hand, a considerably greater distance from the second edge or the centre line of the layers or tubing may also be desirable, for instance 80-200 mm.

While the above simple form of the growing device functions quite satisfactory in most cases, it is occasionally advantageous to provide the growing device with additional longitudinal sealings along longitudinally extending sealing lines, each additional sealing extending from the end of a transverse sealing line at the first point towards a neighbouring, transverse sealing line to a point close to said neighbouring, transverse sealing line and to the adjacent longitudinal passageway, said additional sealings thereby being gently inclined to the inside of the adjacent transverse passageways and leaving a passage from the adjacent longitudinal passageway to each of said transverse passageways for the inlet of nutrient solution therein.

This applies especially for devices having very wide transverse passageways separated by transverse sealing lines extending perpendicular to the longitudinal direction of the device. The above arrangement ensures a correct delivery of the supplied nutrient solution to the area of the inserted roots. Any nutrient solution supplied by a supply pipe in the area of a transverse passageway between two adjacent, transverse sealing lines is transferred to said transverse passageway through the passage left by the additional, gently inclined, sealing. Consequently it is easier to place the plant in such a way that the supply of nutrient solution arrives at the area of the inserted roots.

It is worth underlining that the growing device is used completely without any kind of growing substrate inside the device, thereby eliminating all costs and other disadvantages therefrom. Moreover, storing and shipping costs are thus kept at a minimum. In addition all of the growing device as well as the plant material is burnable after use upon a short air-drying period.

According to a further feature of the invention the growing device is initially provided with a minor throughcut through at least one of the layers of the growing device at the end of each transverse passageway close to the longitudinal passageway at the first edge or to the longitudinal outer passageways, respectively, for insertion of a plant and, according to another feature, with at least one opening to the outside from the longitudinal passageway at the second closed edge of the device or the longitudinal central passageway, respectively, for the outlet of excess nutrient solution, thus expediting the correct mounting of the growing device. The throughcuts and openings can be provided prior to or during the mounting of the growing device.

A further object of the invention is to provide an improved system for hydroponical growing of plants, where a high degree of functional security is achieved, simultaneous with the cost of initial expenditure as well as the operating costs being kept at a very low level.

The inventive system is of the kind comprising
- a collecting tank for a nutrient solution,
- a control means for continuously measuring and adjusting the content of nutrient salts and other additives necessary for the growth of plants by adding the necessary amounts of water, macrosubstances, and microsubstances to the nutrient solution,
- pumps and pipes for continuously carrying nutrient solution to the plants, and
- at least one gutter for collecting and passing-on of used, excess nutrient solution from the plants to the collecting tank.

According to the invention, the system is characterised by further comprising
- a number of inventive growing devices,
- a corresponding number of supply pipes of a length at least equal to the length of the growing device, the supply pipes having spaced outlets, and each supply pipe being inserted in the longitudinal passageway of a growing device at the first edge or a longitudinal outer passageway, respectively, of said device, and
- suspension means for suspending the growing device on each inserted supply pipe in such a manner that each growing device supported by its supply pipe or pipes is suspended hanging below said supply pipe or pipes, and whereby each growing device is located above and transverse to the gutter with its lower longitudinal passageway slightly inclined downwards towards said gutter, and with an outlet from its lower, longitudinal passageway immediately above said gutter.

The entire system is very simple in its construction. Especially by using supply pipes inserted in and supporting the likewise simple growing devices, a very simplified system is achieved, which is also very reliable. At the same time the mounting of the system and the insertion of the plants is performed in a very simple manner, thus saving a lot of time compared with other systems.

In an advantageous embodiment of the inventive system the suspension means comprises
- at least one suspension member, such as a cord or a wire stretched between at least two posts, and
- gripping means gripping around the suspension member and the upper part of the growing device holding the supply pipe at suitable places along the length thereof, thereby fastening the growing device to the suspension member,
- said suspension member being positioned at a level sufficient for keeping the bottom of the growing device just above the top of the gutter.

As a result the growing device is kept at a correct position by the suspension member without subjecting the supply pipe to stresses. Moreover, the growing device with supply pipe is easily mounted at or removed from the suspension member.

In a further advantageous embodiment of the inventive system
- the suspension means comprises two parallel wires, tightly stretched between two posts and kept close to each other on either side of the growing device beneath the supply pipe inserted therein, and
- the suspension means further comprises gripping means, such as hooks, inserted under the wires and the supply pipe and suspended by strings fastened to a mounting means above the growing device,
- thereby supporting the growing device and the plants inserted therein,
- the top of said plant being fastened to the string.

The use of this construction enables the positioning of the growing device between the two wires with the first longitudinal passageway including the supply pipe situated just above the wires. This results in a very stable suspension of the growing device.

Despite the suspension wire or wires being tightly stretched, the wires are slightly bowed in a downward direction when loaded with the growing device. Consequently the lower, second longitudinal passageway is sloped from both ends of the growing device towards the middle, the latter being at the lowermost position. Naturally it is advantageous to place this point above the gutter and to provide the outlet from the second longitudinal passageway at this point.

When using the inventive system for growing plants subjected to wind, said system is advantageously characterised by a further supporting means supporting each growing device against being forcibly removed from the substantially vertically suspended hanging position. In this connection one embodiment of said further supporting means comprises at least one suspension member stretched between above-mentioned posts at a level above the lower longitudinal passageway, and a number of locking elements, such as hooks, clamps, straps or pins, securing the growing device to the supporting means.

In another embodiment of the invention anchoring means holding the growing device, such as strings, nets or tapes, may be fastened at anchoring blocks or suspension members secured below the growing device.

In a system comprising growing devices having two rows of transverse sealing lines the suspension means advantageously comprises at least one suspension member or weighting member pressing or weighing down the central part of the growing device so that it can resist wind action. Said weighting member may advantageously be at least one sandhose placed loosely on the central part of said growing device.

In a particularly advantageous embodiment a system including a growing device with two rows of transverse sealing lines comprises an outer plastic tubing surrounding said growing device and carried by an intermediate carrying means, said outer plastic tubing being closed at each end of the growing device thereby substantially forming a miniature greenhouse around said growing device.

The invention is described in greater detail below by means of examples of embodiments and with reference to the accompanying drawings, in which

Figure 1 is a diagrammatic, perspective side view of a central section of a preferred embodiment of the inventive growing device with an inserted supply pipe and supported by two wires suspended on posts,

Figure 2 is a sectional view along the line II-II of Figure 1,

Figure 3 is a diagrammatic side view of a section of another embodiment of the inventive growing device, and

Figure 4 is a diagrammatic perspective view of an embodiment of the inventive system including the inventive growing device.

Figure 5 is a diagrammatic perspective side view of a further embodiment of the invention including a pair of superposed layers of sheet material, and with further suspension means supporting the lower part of the device,

Figure 6 is a similar diagrammatic perspective side view of the preferred embodiment of the invention supported by a helically wound anchoring string fastened at anchoring blocks,

Figure 7 is a planar view of a mounted, symmetrically shaped, two-sided growing device,

Figure 8 is a sectional view through the growing device of Figure 7 along the line III-III,

Figure 9 is a sectional view through the growing device of Figure 7 along the line IV-IV, and

Figure 10 is a diagrammatic perspective view of a part of the two-sided growing device including an outer plastic tubing.

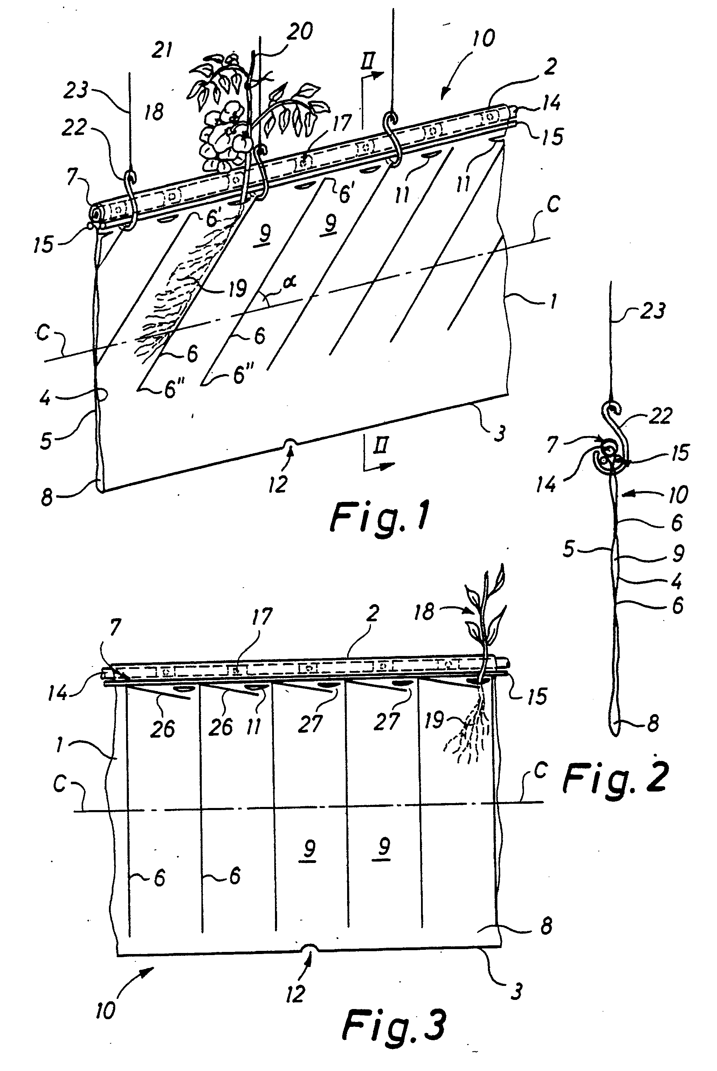

Figures 1 and 2 illustrate a preferred embodiment of the inventive growing device 10. In Figure 1 only a cut-out central section of the growing device is shown. The growing device 10 comprises a collapsed plastic tubing 1 having a first upper, longitudinal, closed edge 2 and a second lower, longitudinal, closed edge 3 opposing each other. The opposing two layers 4, 5 of the collapsed tubing 1 are sealed together along parallel transverse sealing lines 6 extending transversely to the tubing 1 and inclined at an acute angle $\alpha$ to the longitudinal direction C-C of the tubing 1. Each transverse sealing line 6 extends between two points some distance away from each of the longitudinal closed edges 2, 3, respectively, thereby forming two opposing, longitudinal free passageways 7, 8 parallel to the longitudinal closed edges 2, 3. Between the longitudinal passageways 7, 8, the tubing 1 is divided into a number of parallel, flat transverse passageways 9 separated from each other by the transverse sealing lines 6, but open at both ends to the two longitudinal passageway 7, 8 of the growing device 10.

The two opposing layers 4, 5 of the plastic tubing 1 lie flat upon each other. At first the transverse passageways 9 and the longitudinal passageways 7, 8 are completely empty so that the growing devices can assume the form of a coiled-up, endless tube (not shown). The tube can be provided with perforated lines (not shown) to facilitate the separation into suitable lengths of tubing 1, each length forming an individual growing device 10. At the top of each transverse passageway 9 a minor throughcut 11 is made in the layer 4 of the growing device 10, said throughcut enabling the insertion of the roots of a plant into the transverse passageway 9. At the middle of the lower, longitudinal edge 3 an opening 12 is provided acting as an outlet for excess nutrient solution from the growing device 10.

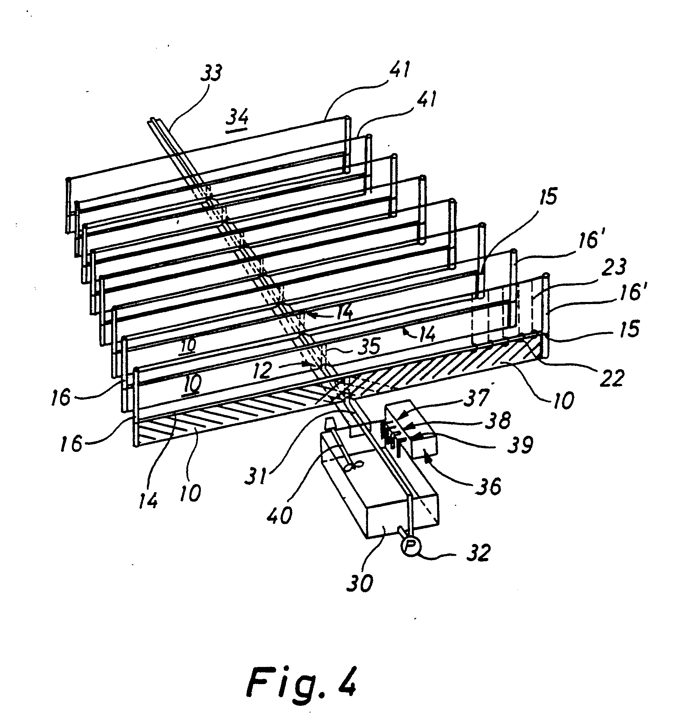

Prior to using the growing device a supply pipe 14 for nutrient solution is inserted into the upper longitudinal passageway 7. The growing device is then mounted on suspension means 15 in form of two parallel wires 15 stretched horizontally between two posts 16, 16′, cf. Figure 4. The two wires 15 are positioned on either side of the growing device 10 and just below the upper longitudinal passageway 7 with the inserted supply pipe 14, and kept close to each other. Thus the supply pipe is nested on the two wires 15 and the rest of the growing device 10 is suspended therefrom.

Different kinds of supply pipes 14 are usable, provided that they can transfer a continuous flow of nutrient solution into each transverse passageway 9, for instance by drip irrigation. In the preferred embodiment a supply pipe 14 of the type comprising a polyethylene pipe with inserted fittings having outlets 17 opposite each transverse passageway 9 is used. The supply pipes are not a part of this invention, but are included for the sake of clarity.

Upon suspension of the growing device 10 nutrient solution is supplied via the supply pipe 14 with outlets 17 and transferred in a continuous flow to each transverse passageway 9. A plant 18 is inserted through the throughcut 11 with the roots 19 of the plant positioned inside the transverse passageway 9 and the stem 20 and top 21 of the plant extending through said throughcut 11 out of the growing device 10. The nutrient solution quickly percolates over the roots 19 and is partially absorbed by said roots. The remaining excess nutrient solution percolates down through the transverse passageway 9 and drain out at the bottom of the transverse passageway for being collected inside the lower longitudinal passageway 8 of the growing device 10. As the wires 15 loaded with the growing device 10 are only suspended at their ends, the wires 15 and thus the growing device 10 are curved downwardly. Upon collection in the longitudinal passageway 8 the excess nutrient solution flows towards the opening 12 acting as an outlet at the middle of said passageway. For preventing the wires 15 from separating from each other resulting in the growing device 10 sliding down between them, gripping means, such as hooks 22, are inserted under the wires 15, surrounding said wires and holding them together below the upper longitudinal passageway 7 holding the supply pipe 14.

In order to obtain support for the top 21 of a plant 18, the hooks 22 are suspended in strings 23 mounted in mounting means 41, cf. Figure 4. The top 21 of the plant 18 is fastened to said strings 23 in a manner known per se. When employing the hooks 22 one of the wires 15 can be omitted. It is further possible to exclusively use the hooks 22 and the strings 23 for the suspension of the growing device. This is of special relevance in case of a rigid supply pipe 14. Under such circumstances both wires 15 can be omitted.

Figure 3 illustrates another embodiment of the inventive growing device 10, where the transverse sealing lines 6 extend substantially perpendicular to the longitudinal direction C-C of the growing device 10. In this embodiment an additional sealing is formed at the top of each transverse passageway, substantially along longitudinally extending sealing lines 26, in order to provide an inlet for the nutrient solution close to the throughcut 11. The additional sealing 26 extends from the end of one transverse sealing line 6 at the upper longitudinal passageway 7 to a point some distance away from the neighbouring transverse sealing line 6 and slopes away from said longitudinal passageway 7. This results in a passage 27 from the longitudinal passageway 7 to a transverse passageway 9, said passage allowing the flow of nutrient solution from the longitudinal passageway 7 to the transverse passageway 9. The throughcut 11 is placed above the passage 27 so that the roots 19 of an inserted plant 18 are positioned in the area of the passage 27.

Apart from the differently orientated, transverse-sealing lines 6 and the additional longitudinal sealings 26 the rest of the growing device 10 is as described above in connection with Figures 1 and 2. The additional sealings 26 can, of course, also be introduced in the embodiment of Figures 1 and 2, although they are normally not necessary in connection with a growing device having transverse sealing lines substantially inclined to the longitudinal direction of the growing device.

Figure 4 illustrates an embodiment of the inventive improved system for hydroponical growing of plants using the inventive growing device 10. The system includes a plurality of parallel rows of growing devices 10 each mounted on wires 15 supported by posts 16, 16' and with supply pipes 14 inserted in each growing device. Additional suspension means are provided in form of hooks 22 inserted through the growing device 10 beneath the wires 15 and the supply pipe 14, said hooks being suspended in strings 23 mounted in a mounting means 41. By means of a pump 32 and via a pressure pipe 31 the nutrient solution is carried from a collecting tank 30 to the individual growing devices 10. The pressure pipe 31 is preferably led through a gutter 33 leading to the collecting tank 30 and extending transverse to the growing devices 10 and midways between the posts 16, 16' in the ground 34.

Nutrient solution is carried to the supply pipe 14 in the growing device 10 through a vertical distribution pipe 35 opposite the growing device and optionally extending through a transverse passageway 9 of the growing device. Especially in case of inclined transverse sealing lines 6, the growing device 10 can be divided into two halves, each mounted on a supply pipe 14 on either side of the gutter 33 between the posts 16, 16' and the distribution pipe 35, preferably in a laterally reversed manner.

At the bottom of each growing device an outlet 12 is formed above the gutter 33. The collecting tank 30 is provided with a control means 36 including a known measuring and dispensing assembly 37, 38, 39. At 37 the measuring assembly measures the content of nutrients and other additives necessary for the growth of plants in the nutrient solution contained in the collecting tank 30. Furthermore it controls the addition of water at 38 and the addition of necessary additives to said solution at 39 in order to obtain a solution with a desired concentration of nutrients. Furthermore the collecting tank 30 is provided with a propeller 40.

For using the system the growing devices 10 are mounted on supply pipes 14 and wires 15. An appropriate nutrient solution is prepared and circulated in the system by means of the pump 32 via pressure pipe 31, distribution pipes 35 and supply pipes 14. From the supply pipes 14 the nutrient solution percolates through each transverse passageway 9 of the growing devices 10 and flows out through outlets 12 into the gutter 33 and is returned to the collecting tank 30 for recirculation.

Now the roots 19 of the plants 18 are inserted into the transverse passageways 9. The circulating nutrient solution percolates over the roots of the plants, said roots absorbing some of the water and the additives. The excess nutrient solution is returned to the collecting tank 30 together with waste products having been excreted from the roots of the plants.

In the collecting tank 30 the nutrient solution is continuously monitored and adjusted by the control means 36. The collecting tank 30 can be provided with an additional rinsing means (not shown) for removing some of the waste products from the plants 18. A predetermined amount of the return solution is to be discarded, either at intervals or continuously, in order to keep the content of waste products separated from the roots below a predetermined standard.

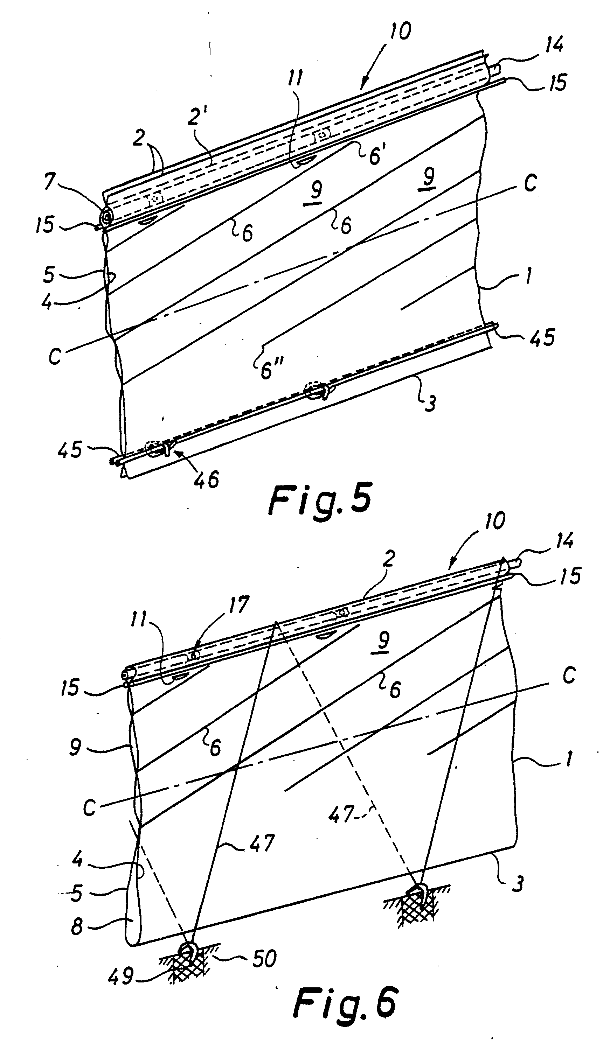

Figure 5 illustrates a further embodiment of the growing device 10 of the invention. The growing device 10 includes a length 1 of two separate layers 4, 5 of sheet material superposed each other, said layers 4, 5 being sealed together along transverse sealing lines 6 as described in connection with Figure 1. The two layers 4, 5 are interconnected along a connection line 2' at the upper edges 2 of said layers, for instance by welding, seaming or by means of locking elements spaced apart in the longitudinal direction C-C of the device. As in Figure 1, a supply pipe 14 is inserted in the upper longitudinal passageway 7 between the connecting line 2' and the transverse sealing lines 6. At the lower part of the device 10 a pair of suspension wires 45 is positioned on either side of the device, stretched between the two posts 16, 16', cf. Figure 4, and kept close to each other by means of clamps 46 inserted through the two layers 4, 5 and surrounding and interlocking the two suspension wires 45. The lower edges 3 of the two layers 4, 5 are left unconnected, thereby leaving a longitudinal opening extending at the bottom of growing device 10 so that excess nutrient solution is let out into the soil or in a gutter (not shown).

In Figure 6 the embodiment of the growing device 10 of Figure 1 is shown with supporting means in form of a helically wound, supporting string 47 wound helically around the growing device 10 and fastened at anchoring means, such as anchoring hooks 48 secured in anchoring blocks 49 in the ground 50. Preferably said strings are made of elastic material. Instead of anchoring blocks 49 a single suspension wire or rod 45 at the bottom of the device can be used.

Furthermore, instead of the clamps 46 of Figure 5, one end of plastic straps (not shown) can be inserted through the layers 4, 5 and tied to the suspension wire or rod 45 at the bottom of the device, the opposite ends of said straps being provided with enlarged end pieces having shoulders acting as holder. Throughcuts with strengthend edges and for the insertion of said plastic straps are provided in the collapsed tubing simultaneous with the forming of the sealing lines 6, for instance by heat-sealing the two layers of plastic 4, 5 to each other in said areas.

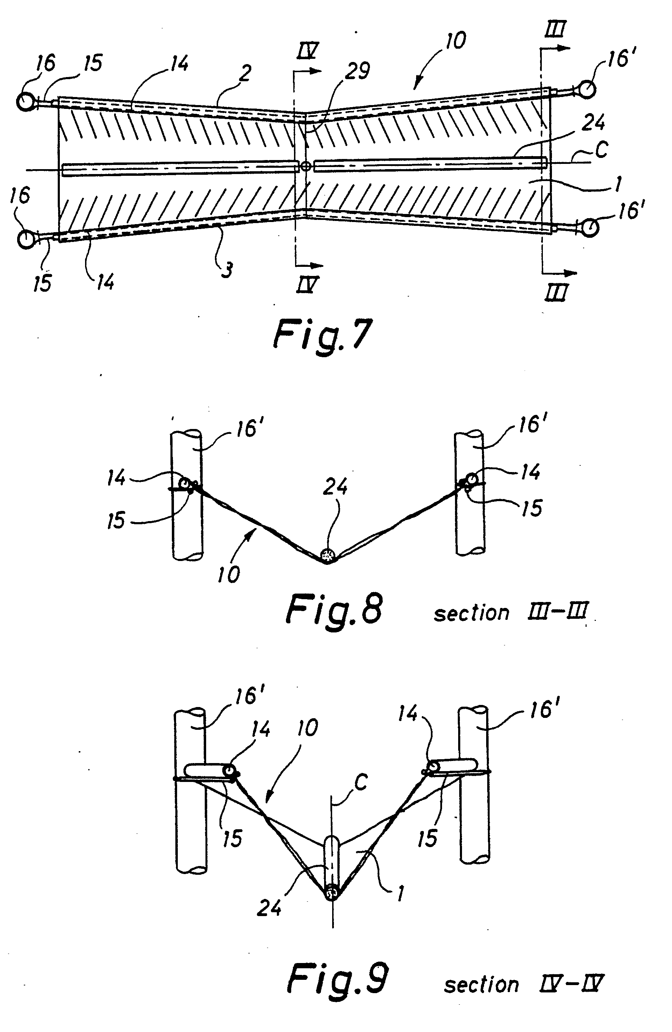

Figures 7-10 illustrate another preferred embodiment of the invention, in which the growing device 10 comprising a collapsed tubing 1 is provided with two parallel rows 62, 63 of transverse sealing lines 6 symmetrically placed around the centre line C and with two longitudinal, outer, free passageways 7, 8 at the opposing edges 2, 3 of the tubing 1. Supply pipes 14 for nutrient solution are inserted in said passageways 7, 8. A free longitudinal central passageway 90 is provided between the two rows 62, 63 of transverse sealing lines 6. Transverse passageways 9 between neighbouring transverse sealing lines 6 in a row 62, 63 are open to the respective longitudinal, outer passageway 7, 8 and to the longitudinal central passageway 90, thus forming passages therebetween for the nutrient solution and for the roots of the plants 18. At least one throughcut 12 is provided in the central passageway acting as an outlet 12 for excess nutrient solution.

When mounted, each of said edges 2, 3 having longitudinal, outer passageways 7, 8 with supply pipes 14 inserted therein are nested on suspended, opposing wires 15 each streched between two posts 16, 16' in substantially the same level, cf. Figure 4. The interjacent part of the growing device 10 hangs between and below said wires 15. Midways between the posts 16, 16' a strap 29 surrounding the opposing wires 15 is tightened thus drawing said wires towards each other. As a result the bottom of the central part of the growing device 10 has a lower position than at the ends of said growing device causing an downward inclination of the central passageway towards the outlet 12, cf. the sectional views along the lines III-III and IV-IV of Figure 7. Moreover the weight of the suspension means 15 and of the growing device 10 with supply pipes 14, plants 18 and nutrient solution weighs down the entire growing device 10 in a curve between the posts 16, 16' thus intensifying said inclination. When the growing device 10 is mounted outdoors a weighting member 24 in form of at least one sandhose may be placed on the growing device 10 above the central passageway 90, thereby assisting the growing device 10 to resist wind action.

The use of this embodiment of the growing device 10 is disclosed in connection with the growing device 10 of Figures 1-6, except that in this case two supply pipes 14 and two series of transverse passageways 9 are provided for each growing device 10. Due to the transverse inclination of the growing device towards the central passageway 90 this embodiment is suitable for growing several plants in each transverse passageway 9 thereby obtaining an intensive utilization of the area of the growing device.

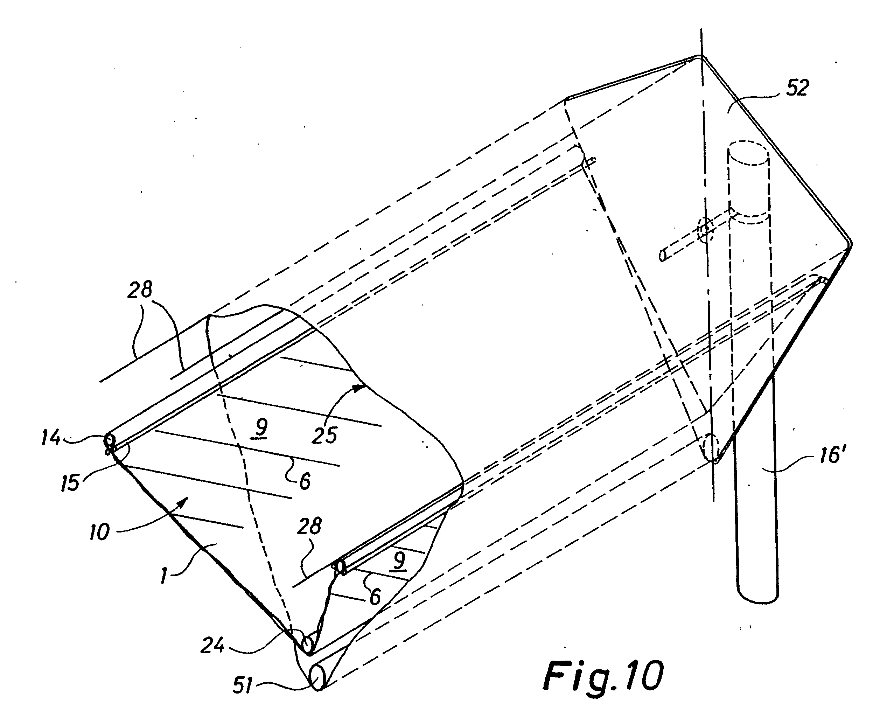

The embodiment illustrated in Figure 10 is further provided with an outer plastic tubing 25 surrounding the suspended growind device 10, said plastic tubing being supported by an intermediate carrying means 28 in form of three parallel wires suspended triangularly and roof-shaped above the growing device 10 between two end frames 52 each clamped on a post 16, 16'. In this case also the wires 15 are suspended between said two end frames 52. An outer plastic tubing 25 rests on above three parallel wires and is weighed down by a weighting member 51 inserted inside the bottom of the tubing 25. Instead of the three parallel wires the carrying means 28 can also be made of spirally wound steel strings or another type of upwards curved frames resting on top of the growing device 10 or mounted in end frames 52. At the ends of the growing device 10 the outer plastic tubing 25 can be closed outside of the end frames 52, thereby ensuring the maintainance of elevated temperatures and relative humidity inside the tubing.

## Claims

1. A growing device (10) for hydroponical growing of plants (18), characterised by comprising
- a windable length (1) of a pair of superposed layers (4, 5) of water-impervious material,
- said two layers (4, 5) being interconnected along a first longitudinal edge (2) thereof, and
- said two layers (4, 5) further being sealed along sealing lines (6) extending transverse to and spaced along the longitudinal direction of the length (1),
- and where each of said transverse sealing lines (6) extends between a first point (6') located some distance away from the first longitudinal edge (2) and a second point (6") located some distance away from the second longitudinal edge (3) of said layers (4, 5),
- said sealing lines (6) thereby leaving a free longitudinal passageway (7) extending along the length of said first edge (2) and forming a series of successive transverse passageways (9) separated from each other by the transverse sealing lines (6) and open to the longitudinal passageway (7) at the first edge (2) and to the second edge (3),
- said transverse passageways (9) having a substantially flat cross-section.

2. A growing device (10) as claimed in claim 1, characterised by
- a windable collapsed plastic tubing (1), its pair of superposed layers (4, 5) being interconnected along opposing first and second longitudinal closed edges (2, 3), respectively, of said collapsed tubing,
- said two superposed layers (4, 5) of the collapsed tubing further being sealed along transverse sealing lines (6) extending transverse to and spaced along the longitudinal direction of the length of the tubing (1),
- and where each of said transverse sealing lines (6) extends between a first point (6′) located some distance away from the first closed edge (2) and a second point (6″) located some distance away from the opposing second closed edge (3) of the collapsed tubing,
- said sealing lines (6) thereby leaving free longitudinal passageways (7, 8) each extending along the length of a respective one of said closed edges of the collapsed tubing (1) and forming a series of successive transverse passageways (9) separated from each other by the transverse sealing lines (6) and open to both of said longitudinal passageways (7, 8).

3. A growing device (10) as claimed in claim 1, characterised by
- a windable, collapsed plastic tubing (1), having two superposed layers (4, 5) interconnected along opposing first and second longitudinal, closed edges (2, 3), respectively, of said collapsed tubing,
- said two superposed layers (4, 5) of the collapsed tubing (1) being sealed along two parallel longitudinal rows (62, 63) of transverse sealing lines (6) extending between a first point (6′) located some distance away from a closed edge (2, 3) of the collapsed tubing (1), and a second point (6″) located further away from said closed edge (2, 3) and some distance away from the centre line C of the collapsed tubing (1) and on the same side as said first point (6′),
- said rows (62, 63) of sealing lines (6) thereby leaving free longitudinal passageways (7, 8) each extending along the length of a respective one of said closed edges (2, 3) and a free longitudinal, central passageway (90) extending between the two parallel rows (62, 63) of sealing lines (6), said two rows further forming two series of successive, transverse, flat passageways (9) separated from each other by the transverse sealing lines (6) and each open to a corresponding longitudinal, outer passageway (7, 8) and to the longitudinal, central passageway (90).

4. A growing device as claimed in claim 1, 2 or 3, characterised in that the transverse sealing lines (6) extend perpendicular to the longitudinal direction of the layers (4, 5) or the tubing (1).

5. A growing device as claimed in claim 1, 2 or 3, characterised in that the transverse sealing lines (6) are inclined to the longitudinal direction of the layers (4, 5) or the tubing (1).

6. A growing device as claimed in claim 3, characterised in that the transverse sealing lines (6) of the two rows (62, 63) are inclined to the longitudinal direction of the tubing (1) in a substantially symmetrical way with respect to the centre line.

7. A growing device as claimed in one or more of the preceding claims 1-6, characterised in that the transverse sealing lines (6) extend between a distance of about 20-80 mm away from a first closed edge (2) or a closed edge (2, 3), respectively, of the layers (4, 5) or tubing (1) and a distance of about 20-200 mm away from the second edge (3) or the centre line C, respectively of the layers (4, 5) or tubing (1).

8. A growing device as claimed in one or more of the preceding claims 1-7, characterised by additional longitudinal sealings (26) along longitudinally extending sealing lines, each additional sealing (26) extending from the end of a transverse sealing line (6) at the first point (6′) towards a neighbouring, transverse sealing line (6) to a point close to said neighbouring, transverse sealing line (6) and to the adjacent longitudinal passageway (7, 8), said additional sealings (26) thereby being gently inclined to the inside of the transverse passageways (9) and leaving a passage (27) from the adjacent longitudinal passageway (7, 8) to each of said transverse passageways (9) for the inlet of nutrient solution therein.

9. A growing device as claimed in one or more of the preceding claims 2-8, characterised by at least one opening (12) to the outside from the passageway (8) at the second closed edge (3) of the device (10) or the central passageway (90), respectively, for the outlet of excess nutrient solution.

10. A growing device as claimed in one or more of the preceding claims 1-9, characterised by a minor throughcut (11) through at least one of the layers (4, 5) of the growing device (10) at the end of each transverse passageway (9) close to the longitudinal passageway (7) at the first edge (2) or to the outer passageways (7, 8) for insertion of a plant (18).

11. A system for hydroponical growing of plants, comprising
- a collecting tank (30) for a nutrient solution,
- a control means (36) for continuously measuring and adjusting the content of nutrient salts and other additives necessary for the growth of plants by adding the necessary amounts of water, macrosubstances, and microsubstances to the nutrient solution,
- pumps (32) and pipes (31, 35) for continuously carrying of nutrient solution to the plants (18), and
- at least one gutter (33) for collecting and passing-on of used, excess nutrient solution from the plants (18) to the collecting tank (30),
characterised by further comprising
- a number of growing devices (10) as claimed in any of the claims 2-10,

- a corresponding number of supply pipes (14) of a length at least equal to the length of the growing device (10), the supply pipes (14) having spaced outlets, and each supply pipe (14) being inserted in the longitudinal passageway (7) of a growing device (10) at the first edge (2) or a longitudinal outer passageway (7, 8), respectively, of said device, and

- suspension means (15) for suspending the growing device (10) on each inserted supply pipe (14) in such a manner that each growing device (10) supported by its supply pipe or pipes (14) is suspended hanging below said supply pipe or pipes (14), and whereby each growing device (10) is located above and transverse to the gutter (33) with its lower longitudinal passageway (8) or central passageway (90), respectively, slightly inclined downwards towards said gutter (33) and with an outlet (12) from its lower, longitudinal passageway (8) or central passageway (90), respectively, immediately above said gutter.

12. A system as claimed in claim 11, characterised in that the suspension means (15) comprises

- at least one suspension member, such as a cord or a wire (15), stretched between at least two posts (16, 16'), and

- gripping means (22) gripping around the suspension member (15) and the upper part of the growing device (10) holding the supply pipe (14) at suitable places along the length thereof, thereby fastening the growing device (10) to the suspension member (15),

- said suspension member being positioned at a level sufficient for keeping the bottom of the growing device (10) just above the top of the gutter (33).

13. A system as claimed in claim 12, characterised in that

- the suspension means (15) comprises two parallel wires (15), tightly stretched between two posts (16, 16'), and kept close to each other on either side of the growing device (10) beneath the supply pipe (14) inserted therein, and in that

- the suspension means (15) further comprises gripping means (22), such as hooks, inserted under the wires (15) and the supply pipe (14) and suspended by strings (23) fastened to a mounting means (41) above the growing device (10),

- thereby supporting the growing device (10) and the plants (18) inserted therein,

- the top (21) of said plants being fastened to the strings (23).

14. A system as claimed in any of the preceding claims 11-13, characterised by a further supporting means (45-46) supporting each growing device against being forcibly removed from said substantially vertically suspended hanging position, for instance by means of wind.

15. A system as claimed in claim 14, in which said supporting means comprises at least one suspension member (45) stretched between said posts (16, 16') at a level just above the lower longitudinal passageway (8), and a number of locking elements, such as hooks, clamps, straps or pins (46), securing the growing device (10) to the suspension members (45)

16. A system as claimed in claims 11-13, further comprising anchoring means (47) such as tapes, nets or strings to be fastend at anchoring blocks (48) or suspension members (45) secured below the growing device.

17. A system as claimed in claim 12, in which said suspension means comprises at least one suspension member or weighting member pressing or weighing down the central part of the growing device.

18. A system as claimed in any of the preceding claims 11-13 and 17 and including a growing device as claimed in claim 3,

- wherein the opposing closed edges (2, 3) of said growing device (10) having supply pipes (14) inserted in the longitudinal outer passageways (7, 8) thereof are nested on suspension members (15) located opposite each other and substantially on the same level, and with the interjacent part of the growing device (10) in a hanging position between and below said suspension members (15), and

- further including an outer plastic tubing (25) surrounding said growing device (10) and carried by an intermediate carrying means (28),

- said outer plastic tubing being closed at each end of the growing device (10).

*Fig.1*

*Fig.2*

*Fig.3*

Fig. 4

**Fig.5**

**Fig.6**

13

**Fig.7**

**Fig.8**  section III-III

**Fig.9**  section IV-IV

14

Fig.10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-042697 (JOLARCH LTD.) <br> * page 6, last paragraph - page 11, last paragraph; figures 1-3 * | 1 | A01G31/02 |
| A | US-A-3744183 (NAOE KATO) <br> * the whole document * | 1 | |
| A | FR-A-2046458 (AEROPONICA) <br> * page 3, line 10 - page 6, line 38; figures 1-3 * | 1 | |

TECHNICAL FIELDS
SEARCHED (Int. Cl.5 )

A01G

The present search report has been drawn up for all claims

| Place of search | Date of completion of the search | Examiner |
|---|---|---|
| THE HAGUE | 12 MARCH 1990 | HERYGERS J.J. |

EPO FORM 1503 03.82 (P0401)